# EUROPEAN PATENT APPLICATION

(11) **EP 1 655 072 A1**
(43) Date of publication of application: **10.05.2006**
(21) Application number: 05023932.6
(22) Date of filing: 03.11.2005
(51) Int. Cl.: B02C 13/09, F16F 9/49, F15B 15/20

(54) **Device for adjusting the protectors in mills for inert and/or recycled materials**

(30) Priority: 05.11.2004 IT VE20040043
(71) Applicant: Franzoi Metalmeccanica S.R.L., 30037 Scorze' (IT)
(72) Inventor: Franzoi, Paolo, 30037 Scorze' (IT)
(74) Representative: Piovesana, Paolo

(57) **Abstract**

A device for adjusting the position of the protector (21) in mills for inert and/or recycled materials, said mill comprising a casing (2) housing in its interior a rotor (10) of horizontal axis provided with hammers (12) which with the protectors define material crushing passageways, said protectors being rigid with the piston rod (20) of a hydraulic actuator (14) fed by a conduit (37) feeding a fluid originating from a reservoir (38), characterised in that a further conduit (52) feeding a hydraulic fluid is connected to the jacket (14) of the actuator, said conduit (52) being positioned between the piston (24) and the guiding headpiece (18) of the rod (20) of the piston (24).

## Description

The present invention relates to a device for adjusting the protectors in mills for inert and/or recycled materials.

Mills for inert and/or recycled materials are known comprising a metal casing with wear plates applied to its side walls and provided with a mouth for feeding the material to be crushed. The casing houses a rotor of horizontal axis provided with hammers which propel the fed material against movable protectors which, to vary the size of the crushed material and/or to compensate wear, are rigid with the piston rods of hydraulic cylinders to enable the passage gap between the hammers and the rotor to be varied.

The casing is constructed in two parts which can be opened to provide access to its interior for maintenance and/or the replacement of the hammers and/or wear plates.

To enable the protectors to immediately yield if an uncrushable body (for example a piece of iron) enters the cylinder chamber, it is known to fix the hydraulic cylinder to the casing by sized breakage pins which break in the case of high stress.

This known system presents however certain drawbacks, and in particular:
- time wastage in replacing the pins to restore mill operation,
- the laboriousness of this operation, which has to be done manually and also leads to a reduction in production.

Another system uses a cylinder which is always pressurized, with the protector rigid with a counteracting threaded bar adjustable by a nut. The cylinder is provided with a maximum pressure valve which ensures that the protector yields when this pressure is exceeded.

A drawback of this system is the time wastage, although less than with the aforesaid system, in restoring the cylinder to its operative condition.

Moreover with both systems, there is the considerable drawback that, when the protector yields, material larger than the predetermined size can pass through.

An object of the invention is to eliminate these drawbacks by providing a device which easily and comfortably adjusts the position of the protector within the metal casing.

Another object of the invention is to enable the protector to be rapidly opened and reclosed if pieces of uncrushable material enter the machine.

These and other objects which will be apparent from the ensuing description are attained according to the invention by a device for adjusting the position of the protector in mills for inert and/or recycled materials, as described in claim 1.

A preferred embodiment of the present invention is described in detail hereinafter with reference to the accompanying drawings, in which:

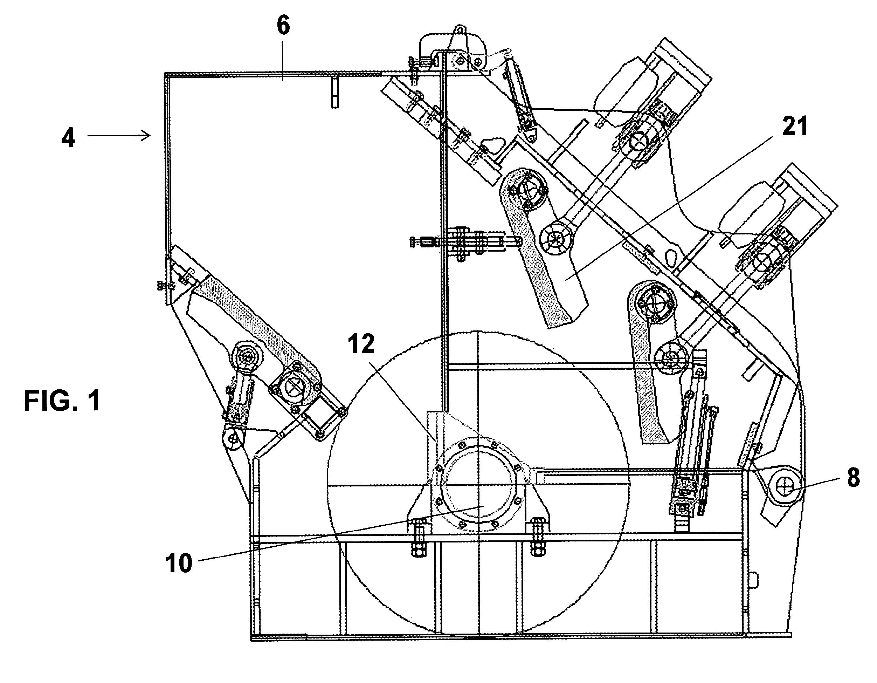

- Figure 1: is a longitudinal section through a mill provided with the device of the invention,

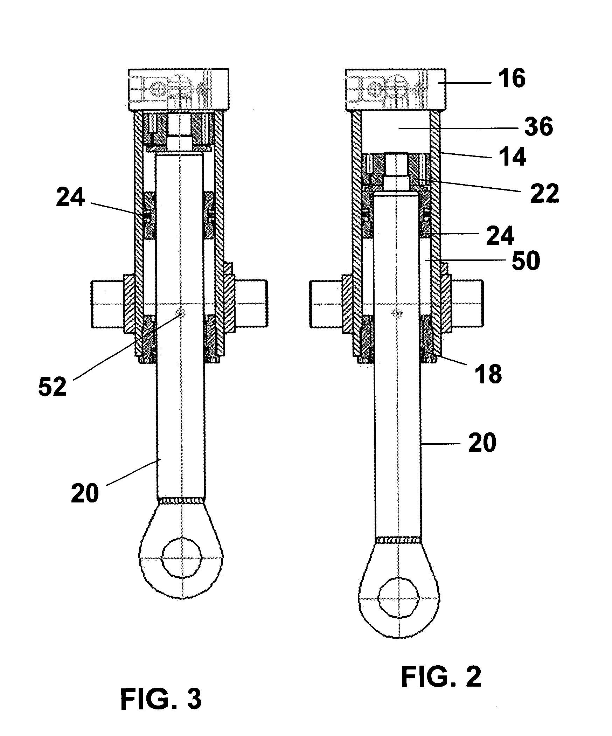

- Figure 2: is a longitudinal section through the cylinder during operation,
- Figure 3: shows it in the same view as Figure 2 on passage of a foreign body,

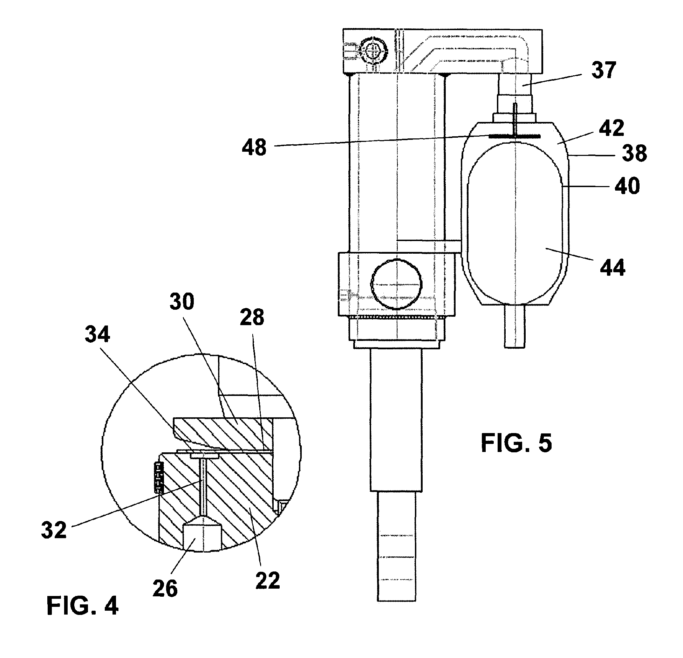

- Figure 4: is an enlarged detail of the piston, rod and cylinder, and
- Figure 5: shows the cylinder reservoir.

As can be seen from the figures, the adjustment device of the invention is applied to the movable part 2 of the mill casing 4, this movable part being hinged to the base 6 on a horizontal pin 8. The base houses a rotor of horizontal axis provided with hammers 12.

The adjustment device consists substantially of a jacket 14 closed by an endpiece 16 and by a guiding headpiece 18 for a piston rod 20 provided with a piston 22. A protector 21 is rigid with the end of the piston rod.

A slidable piston 24 traversed by the piston rod 20 is disposed between the piston 22 and the headpiece 18 to form with the headpiece 18 a chamber 50 fed by a conduit 52.

The piston 22 comprises a plurality of holes 26 parallel to the piston axis and closed by a flexible annular blade 28 formed of harmonic steel, the flexure of which is limited by the presence of a disc 30 rigid with the piston 22.

At that end close to the blade 28, one or more holes 26 comprise a constriction 32 about which a milling 34 is provided to enable oil to pass independently of the closure condition of the blade 28.

The cylindrical chamber 36 defined by the piston 22 and the endpiece 16 communicates via a conduit 37 with a buffer reservoir 38 provided with a membrane 40. This membrane separates the reservoir into two chambers 42, 44 respectively, one 44 of which is filled with pressurized nitrogen, the other 42 being fillable with oil originating from the chamber 36 and passing through a mushroom valve 48, the purpose of which is to prevent direct contact between the pressurized oil and the membrane 40.

The adjustment device of the invention operates in the following manner:
Oil is firstly fed through the conduit 52 into the chamber 50 from a central hydraulic system in order to set the position of the piston 22 within the jacket 14 and consequently the position of the protector 21 relative to the hammers 12, to hence adjust the size of the crushed material.

If a small size is set, the piston rod 20 completely emerges from the jacket 14 and can undergo a stroke equal to the entire length of the chamber 36. Moreover for any position of the piston 22 along the jacket 14, the piston 24 is always in contact with said piston 22.

When a piece of iron enters the casing and strikes against the protector, the stresses arising thereon cause the piston rod 20 to undergo axial travel. As a result of this travel, the oil contained in the chamber 36 partly leaves through the conduit 37 to reach the reservoir 38 and partly passes through the holes 26 to reach the annular space defined by the piston 22 and the piston 24. In this manner the overpressure in the chamber 36 is reduced while at the same time allowing the oil to be more rapidly discharged from it.

During this oil passage through the holes 22 the blade 28 opens but does not deform permanently because of the counteraction of the disc 30.

The oil which enters the reservoir 38 is distributed by the mushroom valve 48 within the reservoir and deforms the membrane 40, to compress the nitrogen contained in the chamber 44.

After the oil has entered the chamber 42 of the reservoir 38 and the foreign body has passed, the overpressure in the chamber 44 urges the oil to reenter the chamber 36 and return the piston rod 20 to its working condition.

During the return of the piston 22 towards the piston 24, the blade 28 again adheres to the surface of the piston 22 to allow the oil to pass only through the millings 34 and the constriction 32.

This achieves damping and modulation of the return stroke of the piston rod 20 into its initial working configuration.

From the aforegoing it is apparent that the adjustment device of the invention presents numerous advantages, and in particular:
- it enables the size of the crushed material to be adjusted remotely because of the facility for regulating the quantity of oil fed into the chamber 50,
- it allows modulation of the return stroke of the piston rod into normal working conditions,
- it allows very rapid restoration of the working state (one second) while at the same time reducing the danger of entry of uncrushable pieces of material into the machine.

## Claims

1. A device for adjusting the position of the protector (21) in mills for inert and/or recycled materials, said mill comprising a casing (2) housing in its interior a rotor (10) of horizontal axis provided with hammers (12) which with the protectors define material crushing passageways, said protectors being rigid with the piston rod (20) of a hydraulic actuator (14) fed by a conduit (37) feeding a fluid originating from a reservoir (38), **characterised in that** a further conduit (52) feeding a hydraulic fluid is connected to the jacket (14) of the actuator, said conduit (52) being positioned between the piston (24) and the guiding headpiece (18) of the rod (20) of the piston (24).

2. A device as claimed in claim 1, **characterised in that** in the interior of the reservoir (38) a diaphragm (40) is provided defining a chamber (44) filled with a pressurized gas.

3. A device as claimed in claim 2, **characterised in that** the gas is nitrogen.

4. A device as claimed in claim 1, **characterised in that** a second slidable piston (24), traversed by the piston rod (20), is housed inside the cylindrical chamber (36) between the piston (22) and the guiding headpiece (18), and is provided with at least one aperture (26) parallel to the piston axis.

5. A device as claimed in claim 4, **characterised in that that** end of the aperture (26) facing said second piston (24) is closed by a flexible blade (28).

6. A device as claimed in claim 4, **characterised in that** those ends of the apertures (26) facing the blade (28) comprise a constriction (32).

7. A device as claimed in claim 6, **characterised in that that** portion of the piston (22) surrounding the end of the constriction (32) presents a milled portion (34).
